# EUROPEAN PATENT SPECIFICATION

(11) **EP 3 030 331 B1**
(45) Date of publication and mention of the grant of the patent: **11.09.2019**
(21) Application number: 14834039.1
(22) Date of filing: 04.07.2014
(51) Int. Cl.: B01D 3/02, C12P 7/06, B01D 3/00

(54) **PRODUCTION OF ETHANOL BY EVAPORATIVE DISTILLATION**
PRODUKTION VON ETHANOL DURCH VERDAMPFUNGSDESTILLATION
PRODUCTION D'ÉTHANOL PAR DISTILLATION PAR ÉVAPORATION

(30) Priority: 08.08.2013 IN 2620MU2013
(43) Date of publication of application: 15.06.2016
(73) Proprietor: Praj Industries Limited, Pune, Hinjewadi 411057 (IN)
(72) Inventor: GHANSHAM BABURAO DESHPANDE, Pune 411057 (IN); SHRIKANT SUBHASH RATHI, Pune 411057 (IN); DEVDATTA KRISHNA DESHPANDE, Pune 411057 (IN); PRASANNA SHAM PAI, Pune 411057 (IN); PANDURANG RAM SHINDE, Pune 411057 (IN)
(74) Representative: Müller & Schubert
(86) International application number: PCT/IN2014/000448
(87) International publication number: WO 2015/019363

(56) References cited:
- IN-A- 2897M UM2 011
- US-A- 3 445 345
- US-A- 5 035 776
- US-B1- 7 297 236
- US-B2- 7 867 365

## Description

### FIELD OF THE INVENTION

The invention relates to a process for the preparation of ethanol using a technique of evaporation distillation, wherein significantly less amount of heat energy is required compared with a process not employing the process of the invention disclosed herein.

### BACKGROUND

Many alcoholic beverages are produced comprising one or more of the steps of: [1] producing ethanol by fermentation of a carbohydrate-rich feedstock to produce a fermented wash having concentration of about 2 to 23% alcohol by volume [ABV]; [2] distilling the product of fermentation at elevated temperatures to produce ethanol products like rectified spirit, neutral spirit or absolute alcohol; and [3] aging the ethanol spirits until it possesses desired flavour, aroma, and colour characteristics. The commercial production of alcohol by distillation has been in widespread operation for many centuries.

The distillation is a known technique for purification of a liquid substance and involves vaporizing the substance at its boiling point, condensing the vapour and collecting the purified form as a condensate. Distillation is useful for separating a mixture when the components have different boiling points. Several kinds of distillation techniques for binary or multi-component mixtures are described and practiced in the art, for example: (1) simple, (2) vacuum or reduced pressure, (3) fractional and (4) steam distillation.

In all techniques available for distillation of ethanol from fermented wash the consumption of steam energy per litre of ethanol produced is the critical measure for economics of the process. Presently, a typical ethanol production process uses about 2 to 3 kilogram of steam per litre of ethanol produced. However, more steam is required if the titre of ethanol in fermented wash is low. There is need of less consumption of steam per litre of ethanol consumed and the invention disclosed herein deals with a solution to the problem of high steam consumption to produce ethanol from fermented wash. The invention presented herein discloses a method of evaporation of fermented wash before distillation having several advantages over conventional distillation methods.

US 5,035,776 discloses a thermally-integrated extractive distillation process for recovering anhydrous ethanol from fermentation or synthetic feedstocks that has a distillation train of four columns. Two columns are preconcentrators operated in parallel. The remaining columns are an extractive distillation dehydrating tower, and an entrainer-recovery column.

IN 2897 MUM 2011 A teaches a process of production of neutral alcohols by the use of energy efficient extractive distillation column.

US 3,445,345 describes an extractive distillation of C₁ to C₃ alcohols and subsequent distillation of purge streams. Disclosed is that a crude alcohol-containing mixture comprising a saturated aliphatic alcohol of not more than 3 carbon atoms and associated impurities is processed in a three-tower distillation system to permit recovery of the desired alcohol product in highly concentrated and purified form.

US 7,867,365 B2 discloses a system for producing ethanol from an organic source and that operates to purify and dry ethanol from a beer source. The system for producing substantially anhydrous ethanol comprises: (a) a first distillation stripping column; (b) a second distillation rectifying column having a higher operating temperature than said stripping column; (c) a molecular sieve dehydration means in fluid communication with said rectifying colunm. Heat from the overhead of the second distillation rectifying colunm and the molecular sieve dehydration are used to heat the first distillation stripping column.

US 7,297,236 B1 discloses a process arrangement for distilling fuel grade ethanol that includes a fermentation portion, a distillation portion, a condensation and dehydration portion, a separation and drying portion and an evaporation portion.

### BRIEF DESCRIPTION

A process for producing ethanol by evaporative distillation is disclosed comprising: preheating a fermented wash forming a first stream; subjecting said first stream to a degasifying column forming a second stream and a first vapour stream; condensing and collecting said first vapour stream in a collection tank forming a high ethanol stream; subjecting said second stream to a first evaporator forming a second vapour stream and a depleted ethanol stream; condensing said second vapour stream using a second evaporator forming a third stream and collecting it in said collection tank forming said high ethanol stream; supplying a small part of said second vapour stream to said degasifying column as heat source; subjecting said depleted ethanol stream to a distillation column forming a third vapour stream and a spent stream; condensing said third vapour stream using said first evaporator forming a fourth stream and collecting it in said collection tank forming said high ethanol stream; supplying said spent stream to said second evaporator and concentrating it to form a concentrated spent stream and a process condensate stream; and subjecting said high ethanol stream to a rectification process to recover rectified ethanol.

### DESCRIPTION OF THE DRAWINGS

Particular examples of methods in accordance with this invention will now be described with reference to accompanying drawing, in which:

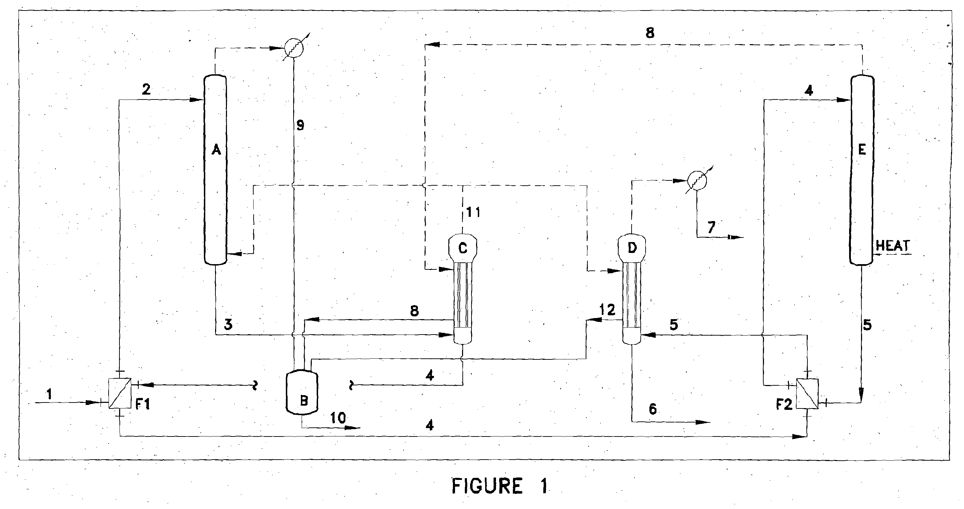

FIGURE 1 is an exemplary plan of the invention showing several features that control the process of evaporative distillation of ethanol from a fermented wash. A fermented wash after preheating 2 is fed to a degasifying column A. A stream 3 from bottom of said degasifying column is fed to a first evaporator C, where is gets heated to form next stream 4, which through a heat exchanger F1 heats stream 1 and then further gets heated in a second heat exchanger F2 to higher temperature before being sent to a mash column E, forming a high ethanol stream 8 which further collect into collecting tank B via evaporator C. The top stream 11 of evaporator C is split; and one portion runs said degasifying column A, while remaining portion is condensed by evaporator D forming stream 12, which is collected in tank B. The bottom stream 5 from said mash column E is fed to evaporator D to remove water 7 forming a concentrated spent stream 6. The vapour stream 9 from column A is condensed and collected in tank B. The ethanol content of high ethanol stream 10 is about 40% by volume, which is sent to further purification/ rectification.

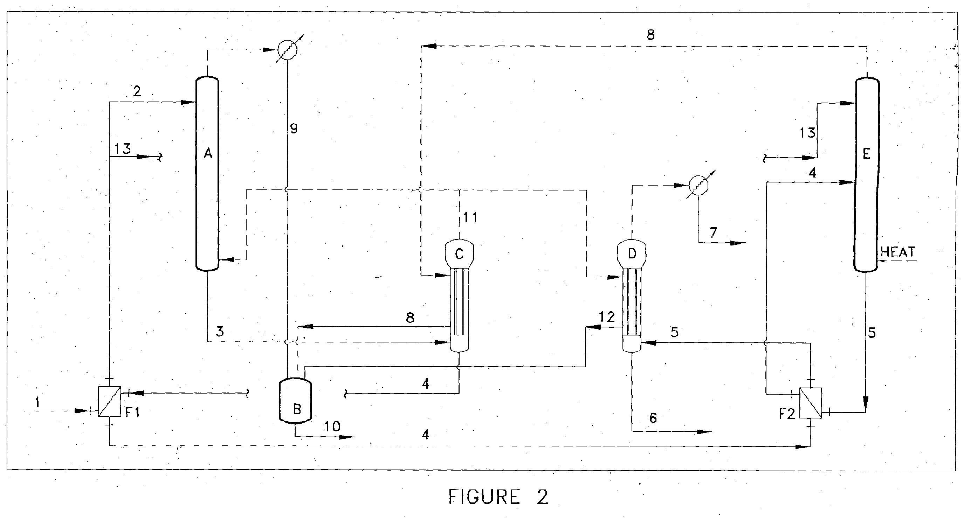

FIGURE 2 is another exemplary plan of the invention wherein a fermented wash after preheating 2 is split into two streams at a ratio of 70:30, the larger stream 2 is fed to a degasifying column A, while the smaller stream 13 is directly fed to a mash column E keeping the other steps of the process as depicted in FIGURE 1. This by-pass of about 30 % of preheated fermented wash 13 directly to the mash column E increases the vapour content of stream 8 leading to increase in evaporation efficiency of the evaporators significantly. This is an optional feature for increasing the efficiency of the process disclosed herein.

### DETAILED DESCRIPTION

In one embodiment of the present invention, a fermented wash 1 with ethanol concentration of between 2 to 23% ABV, preferably 6 to 14% ABV is obtained from yeast fermentation of a carbohydrate rich feedstock like grains, cereals, tubers, molasses, sugarcane juice, lignocellulosic materials or synthetic ethanol. This wash 1 is then preheated to about 60°C using a hot vapour stream 4 of first evaporator C in a heat exchanger F1. This preheated wash [first stream, 2] is subjected to a degasifying column A to separate gases and an top ethanol rich stream [first vapour stream, 9]. After removal of gases, said ethanol rich stream 9 is condensed and collected in a collection tank B. Said degasifying column A is heated by a part of top stream [second vapour stream, 11] obtained from said first evaporator C. The bottom stream [second stream, 3] of said degasifying column A is fed to said first evaporator C forming a second vapour stream 8 and a depleted ethanol stream 4. Another part of said second vapour stream 11 is fed to a second evaporator D forming a third stream 12, which is collected in said collection tank B. Simultaneously, said second evaporator D concentrates a spent stream 5 from a mash column E, separating water for the process recycle. Said depleted ethanol stream 4 from the bottom of said first evaporator C is further preheated to about 80°C by energy of said spent stream 5 in a heat exchanger F2 and then fed to said mash column E forming a third vapour stream 8 and said spent stream 5. Said first evaporator C is heated by the energy present in said third vapour stream 8, condensing and collecting it in said collection tank B. Said collection tank B gives high ethanol stream 10 suitable for further rectification. Said mash column E is supplied with heat for energy requirements. Ethanol content of stream 10 from said collection tank is about 30 to 40% by volume.

In the disclosed invention as illustrated in FIGURE 1 the steps of said process are: the fermented wash 1 is preheated with a bottom stream 4 of a first evaporator C in a heat exchanger F1. This preheated stream 2 is fed to a degasifying column A. Herein, gases from 2 are removed along with ethanol vapours 9, which are condensed and collected in a collection tank B. A bottom stream 3 from said degasifying column is then subjected to said first evaporator C heating it to form two streams; a top ethanol rich vapour stream 11 and bottom stream 4. Said vapour stream 11 is split and some part is to sent to degasifying column A for its running and rest is sent to a second evaporator D, wherein it is condensed to form stream 12, which is collected in said collection tank B. The energy of vapour stream 11 is used to concentrate a spent stream 5 coming from mash column E to separate process water for recycle 7. Said bottom stream 4 is preheated with a heat exchanger F2 using said spent stream 5 and subjected to distillation in said mash column E, leading to said vapour stream 8 and said spend stream 5. Said mash column is heated externally to maintain a desired temperature in the system. This method of efficient use of energy affords about 40% ethanol by volume in collection tank B, which is subjected to further purification and rectification.

In a different embodiment of the disclosed invention as illustrated in FIGURE 2 the steps of said process are same as per FIGURE 1 except that the preheated stream 2 is divided in a ratio of 70:30. The larger stream 2 is fed to a degasifying column A, while the smaller stream 13 is directly fed to the mash column E. This by-pass of about 30 % of preheated fermented wash 13 directly to the mash column E increases the vapour content of stream 8 leading to increase in evaporation efficiency of the evaporators significantly. This is an optional feature for increasing the efficiency of the process disclosed herein.

Furthermore a process for producing ethanol by evaporative distillation is disclosed, wherein fermented wash is first evaporated in an evaporator to generate a concentrated ethanol stream. The remaining part of said wash is then further purified in a mash column to isolate remaining ethanol from said wash. In this process as a large part of fermented wash is removed in evaporation process, the load on the mash column is significantly less and hence small size of mash column is required.

Example provided below gives wider utility of the invention without any limitations as to the variations that may be appreciated by a person skilled in the art. A non-limiting summary of various embodiments is given in the examples and tables, which demonstrate the advantageous and novel aspects of the process disclosed herein. Particular examples of processes in accordance with this invention will now be described with reference to the accompanying drawings.

### EXAMPLE

In one embodiment of the present invention about 35 KLPD (Kilo Litres Per day) ethanol production plant is operated using the method of evaporative distillation disclosed herein. In a plant fermented wash produced at the rate of about 17 TPH (Tons Per Hour) contained about 8% v/v of ethanol. This fermented wash at about 32 °C was preheated to about 58 to 60 °C by a plate type heat exchanger utilizing the excess heat from the concentrated bottom stream of first evaporation unit. Said preheated stream (first stream) was fed into degasifying column to remove the dissolved gases from the fermented wash and produced a first vapour stream and a bottom second stream having concentration of about 8 % V/V of ethanol. Said first vapour stream was condensed to produce high ethanol stream and collected in a collection tank. Said second stream was further subjected to said first evaporator, generating a second vapour stream and a depleted ethanol stream . Here said first evaparator is heat integrated with a mash column downstream. Said second vapour stream from said first evaporator contained about 37% V/V of ethanol, which was condensed to produce high ethanol stream and collected in said collection tank. Said depleted ethanol stream produced in bottom contained about 4.2 % V/V of ethanol which was fed to said mash column. Before entry to said mash column said depleted ethanol stream was preheated in a heat exchanger by excess heat of spent stream of said mash column. Said mash column was provided required heat from an external source. The third vapour stream from the top of said mash column ran said first evaporator. Said spent stream fed to a second evaporator for concentrating it to contain about 12% total solid by weight. The third vapour stream generated from mash column contained about 26% V/V of ethanol which was condensed to produce high ethanol stream and collected in said collection tank. The said final high ethanol stream from collection tank was subjected to rectification to obtain 95 % V/V of ethanol. This method afforded about 35 KLPD (Kilo Litres Per Day) of ethanol from about 17 TPH (Tons Per Hour) of fermented wash with consumption of steam at the rate of about 1.3 kilogram per litre of ethanol.

## Claims

1. A process for producing ethanol by evaporative distillation comprising:
a. preheating a fermented wash (1) to about 60 °C in heat exchanger (F1) forming a first stream (2);
b. subjecting said first stream (2) to a degasifying column (A),
wherein said degasifying column removes gaseous part of said fermented wash, forming a second stream (3) and a first vapour stream (9);
c. condensing and collecting said first vapour stream (9) in a collection tank (B) forming a high ethanol stream (10);
d. subjecting said second stream (3) to a first evaporator (C) forming a second vapour stream (11) and a depleted ethanol stream (4);
e. condensing said second vapour stream (11) using a second evaporator (D) forming a third stream (12) and collecting it in said collection tank (B) forming said high ethanol stream (10), wherein said second evaporator (D) is energized using said second vapour stream (11);
f. supplying a small part of said second vapour stream (11) to said degasifying column (A) as heat source to run said degasifying column (A);
g. subjecting said depleted ethanol stream (4) to a mash column (E) through heat exchanger (F1), wherein said depleted ethanol stream is used to preheat said fermented wash (1), and then via second heat exchanger (F2), where it gets heated to higher temperature, forming a third vapour stream (8) and a spent stream (5), wherein said mash column (E) is operated using steam energy as necessary;
h. condensing said third vapour stream (8) using said first evaporator (C) forming a fourth stream (8) and collecting it in said collection tank (B) forming said high ethanol stream (10), wherein said first evaporator (C) is energized using said third vapour stream (8);
i. supplying said spent stream (5) to said second evaporator (D) and concentrating it to form a concentrated spent stream (6) and a process condensate stream (7), wherein said spent stream (5) is used to preheat said depleted ethanol stream (4) to about 80 °C in heat exchanger (F2); and
j. subjecting said high ethanol stream (10) to a rectification process to recover rectified ethanol.

2. The process according to claim 1, wherein after step a. and before step b. the fermented wash after preheating is split into two streams at a ratio of 70:30 and the larger stream (2) is fed to degasifying column (A), while the smaller stream (13) is directly fed to a mash column (E).

## Patentansprüche

1. Verfahren zum Produzieren von Ethanol durch Verdampfungsdestillation, umfassend:
a. Vorwärmen einer fermentierten Gärflüssigkeit (1) auf ungefähr 60 °C in Wärmetauscher (F1), einen ersten Strom (2) bildend;
b. Aussetzen des genannten ersten Stroms (2) einer Entgasungssäule (A), worin die genannte Entgasungssäule den gasförmigen Teil der genannten fermentierten Gärflüssigkeit entfernt, einen zweiten Strom (3) und einen ersten Dampfstrom (9) bildend;
c. Kondensieren und Sammeln des genannten ersten Dampfstroms (9) in einem Sammeltank (B), einen ethanolreichen Strom (10) bildend;
d. Aussetzen des genannten zweiten Stroms (3) einem ersten Verdampfer (C), einen zweiten Dampfstrom (11) und einen abgereicherten Ethanolstrom (4) bildend;
e. Kondensieren des genannten zweiten Dampfstroms (11), unter Verwendung eines zweiten Verdampfers (D), einen dritten Strom (12) bildend, und dessen Sammeln in dem genannten Sammeltank (B), den genannten ethanolreichen Strom (10) bildend, worin der genannte zweite Verdampfer (D) unter Verwendung des genannten zweiten Dampfstroms (11) mit Energie versorgt wird;
f. Zuführen eines kleinen Teils des genannten zweiten Dampfstroms (11) zu der genannten Entgasungssäule (A) als Wärmequelle, um die genannte Entgasungssäule (A) zu betreiben;
g. Aussetzen des genannten abgereicherten Ethanolstroms (4) einer Maischesäule (E) durch Wärmetauscher (F1), worin der genannte abgereichterte Ethanolstrom verwendet wird, um die genannte fermentierte Gärflüssigkeit (1) vorzuwärmen, und dann über den zweiten Wärmetauscher (F2), wo er auf eine höhere Temperatur erwärmt wird, einen dritten Dampfstrom (8) und einen verbrauchten Strom (5) bildend, worin die genannte Maischesäule (E) unter Verwendung von Dampfenergie, nach Bedarf, betrieben wird
h. Kondensieren des genannten dritten Dampfstroms (8) unter Verwendung des genannten ersten Verdampfers (C), einen vierten Strom (8) bildend, und sein Sammeln in genanntem Sammeltank (B), den genannten ethanolreichen Strom (10) bildend, worin der genannte erste Verdampfer (C) unter Verwendung des genannten dritten Dampfstroms (8) mit Energie versorgt wird;
i. Zuführen des genannten verbrauchten Stroms (5) zu dem genannten zweiten Verdampfer (D) und sein Konzentrieren, um einen konzentrierten verbrauchten Strom (6) und einen Prozesskondensatstrom (7) zu bilden, worin der genannte verbrauchte Strom (5) verwendet wird, um den genannten abgereicherten Ethanolstrom (4) in Wärmetauscher (F2) auf ungefähr 80 °C zu erwärmen; und
j. Aussetzen des genannten ethanolreichen Stroms (10) einem Rektifikationsprozess, um rektifiziertes Ethanol zu gewinnen.

2. Verfahren, gemäß Anspruch 1, worin nach Schritt a. und vor Schritt b. die fermentierte Gärflüssigkeit nach dem Vorwärmen in zwei Ströme in einem Verhältnis von 70:30 geteilt wird und der größere Strom (2) in die Entgasungssäule (A) eingespeist wird, während der kleinere Strom (13) direkt in eine Maischesäule (E) eingespeist wird.

## Revendications

1. Procédé de production d'éthanol par distillation par évaporation comprenant les étapes consistant :
a. à préchauffer un moût fermenté (1) à environ 60°C dans un échangeur de chaleur (F1) formant un premier courant (2) ;
b. à soumettre ledit premier courant (2) à une colonne de dégazage (A), où ladite colonne de dégazage retire la partie gazeuse dudit moût fermenté, formant un deuxième courant (3) et un premier courant de vapeur (9) ;
c. à condenser et à collecter ledit premier courant de vapeur (9) dans un réservoir de collecte (B) formant un courant à haute teneur en éthanol (10) ;
d. à soumettre ledit deuxième courant (3) à un premier évaporateur (C) formant un deuxième courant de vapeur (11) et un courant appauvri en éthanol (4) ;
e. à condenser ledit deuxième courant de vapeur (11) en utilisant un deuxième évaporateur (D) formant un troisième courant (12) et à le collecter dans ledit réservoir de collecte (B) formant ledit courant à haute teneur en éthanol (10), où ledit deuxième évaporateur (D) est activé en utilisant ledit deuxième courant de vapeur (11) ;
f. à fournir une petite partie dudit deuxième courant de vapeur (11) à ladite colonne de dégazage (A) en tant que source de chaleur pour faire fonctionner ladite colonne de dégazage (A) ;
g. à soumettre ledit courant appauvri en éthanol (4) à une colonne à trempe (E) à travers l'échangeur de chaleur (F1), où ledit courant appauvri en éthanol est utilisé pour préchauffer ledit moût fermenté (1), et ensuite par l'intermédiaire d'un deuxième échangeur de chaleur (F2), où il est chauffé à une température plus élevée, formant un troisième courant de vapeur (8) et un courant résiduel (5), où ladite colonne à trempe (E) fonctionne en utilisant de l'énergie de vapeur si nécessaire ;
h. à condenser ledit troisième courant de vapeur (8) en utilisant ledit premier évaporateur (C) formant un quatrième courant (8) et à le collecter dans ledit réservoir de collecte (B) formant ledit courant à haute teneur en éthanol (10), où ledit premier évaporateur (C) est activé en utilisant ledit troisième courant de vapeur (8) ;
i. à fournir ledit courant résiduel (5) audit deuxième évaporateur (D) et à le concentrer pour former un courant résiduel concentré (6) et un courant de condensat de traitement (7), où ledit courant résiduel (5) est utilisé pour préchauffer ledit courant appauvri en éthanol (4) à environ 80°C dans l'échangeur de chaleur (F2) ; et
j. à soumettre ledit courant à haute teneur en éthanol (10) à un processus de rectification pour récupérer de l'éthanol rectifié.

2. Procédé selon la revendication 1, dans lequel, après l'étape a. et avant l'étape b., le moût fermenté après préchauffage est divisé en deux courants selon un rapport de 70:30 et le courant le plus grand (2) est acheminé vers la colonne de dégazage (A), tandis que le courant le plus petit (13) est directement acheminé vers une colonne à trempe (E).
